# FASCICULE DE BREVET EUROPEEN

(11) **EP 3 224 668 B1**
(45) Date de publication et mention de la délivrance du brevet: **27.10.2021**
(21) Numéro de dépôt: 15810771.4
(22) Date de dépôt: 27.11.2015
(51) Int. Cl.: G02C 5/22

(54) **CHARNIERE POUR DES BRANCHES DE LUNETTES**
SCHARNIER FÜR BRILLENBÜGEL
HINGE FOR SPECTACLE TEMPLES

(30) Priorité: 28.11.2014 FR 1461679
(43) Date de publication de la demande: 04.10.2017
(73) Titulaire: Optisun, 01100 Oyonnax (FR); Applications Lunetieres, 39400 La Mouille (FR); V.G.I., 31300 Toulouse (FR)
(72) Inventeur: MAITRE, Olivier, F-01580 Matafelon Granges (FR); MALFROY, Jean-Yves, F-39400 Morez (FR)
(74) Mandataire: LLR
(86) Numéro de dépôt international: PCT/IB2015/059180
(87) Numéro de publication internationale: WO 2016/084045

(56) Documents cités:
- FR-A1- 2 737 020
- JP-A- S5 983 128
- US-A1- 2001 024 262

## Description

La présente invention concerne une charnière pour une branche de lunettes. Une charnière de branche de lunettes comprend généralement un charnon solidaire de la monture, une mortaise aménagée dans la branche, dans laquelle ce charnon est engagé, et une vis engagée au travers de la branche et du charnon, formant l'axe de pivotement de la branche.

Les dimensions respectives du charnon et de la mortaise et/ou le serrage de la vis permettent l'existence de frottements au niveau de la charnière, faisant que la branche reste en position dépliée lorsque la paire de lunettes est manipulée.

Ces frottements ont pour inconvénient de diminuer progressivement au fur et à mesure de l'utilisation de la paire de lunettes, par suite d'usure des surfaces en contact, et la vis peut se desserrer plus ou moins, faisant que du jeu apparaît dans le mouvement de la branche. Il en résulte une utilisation plus difficile de la paire de lunettes, une impression, pour l'utilisateur, de qualité médiocre de la paire de lunette, et le risque de désassemblage d'une branche.

Exemples de charnières conventionnelles sont divulguées par JP S59 83128 A, FR 2 737 020 A1 et US 2001/024262 A1.

La présente invention a pour objectif de remédier à ces inconvénients, en fournissant une charnière dans laquelle des frottements sont conservés à un niveau suffisamment élevé tout au long de la durée d'utilisation de la paire de lunettes, de façon à conserver un mouvement contrôlé des branches, et qui présente un risque amoindri de desserrage de la vis et donc de désassemblage d'une branche.

La charnière concernée, selon la rev. indépendante 1, 2. comprend de manière connue en soi, un charnon solidaire d'une embase destinée à être fixée à la monture de la paire de lunettes, une mortaise aménagée dans la branche, dans laquelle ce charnon est destiné à être engagé, et une vis, ou broche ou organe similaire, destinée à être engagée au-travers de la branche et du charnon de manière à assembler la branche au charnon et à former l'axe de pivotement de la branche.

Selon l'invention,
- le charnon présente une tranche convexe, en arc de cercle centré sur l'axe de pivotement de la branche, et forme une encoche sur le côté interne du charnon, délimitée, sur un côté, par l'embase ou par la portion du charnon reliée à cette embase, et, sur l'autre côté, par ladite tranche ;
- la charnière comprend un patin destiné à venir en appui contre ladite tranche, formant une paroi d'appui contre cette tranche et ayant la même courbure que cette tranche, cette paroi d'appui s'étendant sur un arc représentant au moins un quart de l'arc selon lequel s'étend la tranche ;
- la charnière comprend un moyen élastique sollicitant le patin vers ladite tranche, de telle sorte que ladite paroi d'appui soit pressée contre cette tranche,
- ladite encoche est dimensionnée de façon à loger partiellement le patin dans la position de repliage de la branche le long de la monture.

Il sera compris que par l'expression "côté interne du charnon", il est fait référence au côté du charnon se trouvant vers l'intérieur de la paire de lunettes, donc tourné vers l'autre branche de cette paire de lunettes.

La charnière selon l'invention comprend ainsi un patin venant en appui contre le charnon par une paroi d'appui étendue, et qui est sollicité contre la tranche de ce charnon par un moyen élastique. Cette paroi d'appui étendue et cette sollicitation permettent de créer des frottements entre le charnon et la branche, ne se réduisant pas au long de la durée d'utilisation de la paire de lunettes. Un contrôle adéquat du mouvement de la branche est ainsi conservé sur l'ensemble de cette durée d'utilisation. L'encoche permet de former un logement pour le patin dans la position de repliage de la branche le long de la monture, et permet donc que la branche puisse être amenée dans cette position de repliage nonobstant le relatif encombrement angulaire du patin.

Le patin, pressé contre le charnon, permet également de faire exister une tension radiale sur la vis, qui s'avère s'opposer favorablement au dévissage de cette vis.

De préférence, l'arc de cercle selon lequel s'étend ladite tranche est d'au moins 135°.

De préférence, le patin est dimensionné de manière à ce que sa paroi d'appui s'étende sur un arc dont la longueur est de l'ordre du tiers de celui selon lequel s'étend ladite tranche.

Ce rapport de surface s'avère être un bon compromis entre l'étendue de la paroi d'appui et l'encombrement angulaire du patin.

De préférence, ladite paroi d'appui s'étend sur un arc de l'ordre de 70° ; ladite tranche s'étend alors sur un arc de l'ordre de 210°.

Selon une forme de réalisation préférée de l'invention, le moyen élastique est constitué par un ressort hélicoïdal interposé entre le patin et une paroi de la branche.

Cette paroi de la branche est notamment la paroi délimitant le fond de la mortaise.

Ce fond peut présenter un alésage dans lequel est engagée une extrémité du ressort, de façon à assurer le montage de ce ressort sur cette branche.

Le patin comprend avantageusement, sur son côté opposé à ladite paroi d'appui, une extension tubulaire apte à recevoir le ressort en elle. La liaison du ressort et du patin est ainsi bien assurée.

La vis peut présenter une portion distale filetée ayant un diamètre externe de filet supérieur au diamètre qu'a la portion du corps de la vis destinée à s'étendre au travers de l'alésage que comprend le charnon pour recevoir cette vis. Par "distale", on entend la portion d'extrémité du corps de la vis qui est opposée à la tête de cette vis.

Ledit alésage présente par conséquent un diamètre adapté à être traversé par ladite portion distale filetée de la vis, donc un diamètre notablement supérieur à celui de ladite portion du corps de la vis ; il existe ainsi un jeu entre la paroi du charnon délimitant l'alésage et cette portion du corps de la vis. La pression exercée sur le charnon par ledit moyen élastique amène le charnon au contact de cette portion du corps de la vis, ce qui permet que le charnon s'étende en dessous de ladite portion filetée de la vis et qu'il forme ainsi une surface axiale de butée venant s'opposer au recul de la vis en cas de début de dévissage de cette dernière.

Ce dévissage est ainsi empêché de manière efficace.

L'invention sera bien comprise, et d'autres caractéristiques et avantages de celle-ci apparaîtront, en référence au dessin schématique annexé ; ce dessin représente, à titre d'exemple non limitatif, une forme de réalisation préférée de la charnière concernée.
La figure 1 est une vue de cette charnière de côté, à l'état d'assemblage, selon une première forme de réalisation ;
la figure 2 est une vue en perspective du charnon que comprend la charnière ;
la figure 3 est une vue de dessus de trois éléments que comprend la charnière, en éclaté ;
la figure 4 est une vue de ces éléments similaire à la figure 3, dans la position de dépliage de la branche, l'un des éléments étant vu en coupe ;
la figure 5 en est une vue de ces mêmes éléments, similaire à la figure 4, dans la position de repliage de la branche le long de la monture de la paire de lunettes ;
la figure 6 est une vue en perspective éclatée de trois éléments que comprend la charnière selon une deuxième forme de réalisation ;
la figure 7 est une vue de côté d'une vis que comprend la charnière selon cette deuxième forme de réalisation, et
la figure 8 est une vue de côté de la charnière selon cette deuxième forme de réalisation, à l'état d'assemblage.

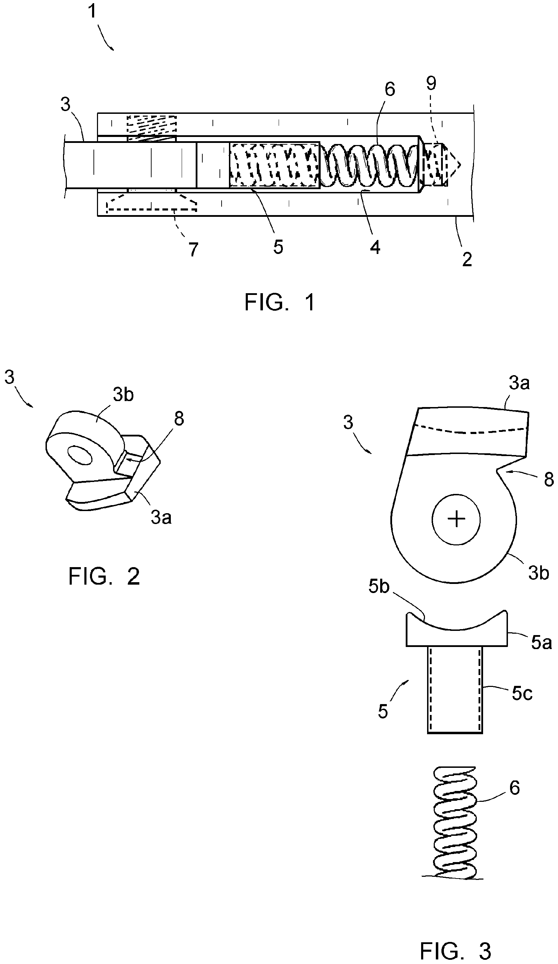

La figure 1 représente une charnière 1 pour une branche de lunettes 2, comprenant un charnon 3, une mortaise 4 aménagée dans la branche 2, dans laquelle ce charnon 3 est engagé, un patin 5, un ressort 6 et une vis 7 engagée au travers de trous aménagés dans la branche 2 et le charnon 3 de manière à assembler cette branche à ce charnon et à former l'axe de pivotement de la branche 2.

Le charnon 3 est mieux visible sur les figures 2 et 3. Il est solidaire d'une embase 3a destinée à être fixée à la monture (non représentée) de la paire de lunettes et présente une tranche uniformément convexe 3b, en arc de cercle centré sur l'axe de pivotement de la branche 2. Cette tranche 3b s'étend sur un arc de l'ordre de 210°, depuis une encoche 8 que forme le charnon 3 sur son côté interne.

Cette encoche 8 est délimitée, sur un côté, par la portion du charnon 3 reliée à l'embase 3a, et, sur l'autre côté, par ladite tranche 3b.

La mortaise 4 est aménagée dans la branche 2, depuis l'extrémité de cette branche. Son fond présente un alésage 9 dans lequel est engagée une extrémité du ressort 6, de façon à assurer le montage de ce ressort sur la branche 2.

Le patin 5 présente un corps 5a formant, sur un côté, une paroi 5b d'appui du patin contre la tranche 3b ; sur son côté opposé à cette paroi d'appui 5b, le corps 5a forme une extension tubulaire 5c.

Le corps 5a est dimensionné de manière à ce que la paroi d'appui 5b s'étende sur un arc de l'ordre du tiers de celui selon lequel s'étend la tranche 3b, soit sur un arc d'environ 70°. La paroi d'appui 5b a la même courbure que cette tranche 3b.

L'extension tubulaire 5c est apte à recevoir le ressort 6 en elle, de façon ajustée.

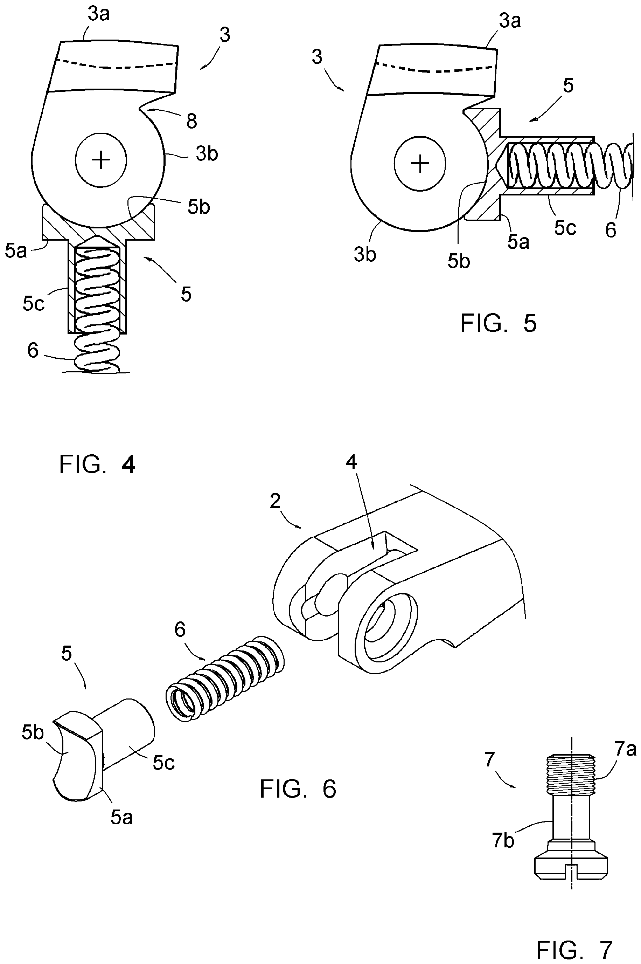

A l'état assemblé de la charnière, comme visible sur les figures 4 et 5, le ressort 6 sollicite le patin 5 vers la tranche 3b, de façon que la paroi d'appui 5b vienne porter contre la tranche 3b selon une surface étendue, et que cette paroi 5b soit pressée contre cette tranche. Il est ainsi crée des frottements entre le charnon 3 et la branche 2 ne se réduisant pas au long de la durée d'utilisation de la paire de lunettes, permettant qu'un contrôle adéquat du mouvement de la branche 2 soit conservé sur l'ensemble de cette durée d'utilisation. L'encoche 8 permet de former un logement pour le patin 5 dans la position de repliage de la branche 2 le long de la monture (cf. figure 5), et permet donc que la branche 2 puisse être amenée dans cette position de repliage nonobstant le relatif encombrement angulaire du patin 5.

Le patin 5, pressé contre le charnon 3, permet également de faire exister une tension radiale sur la vis 7, qui s'avère s'opposer favorablement au dévissage de cette vis.

En référence à la figure 6, il apparaît que la branche 2, le patin 5 et le ressort 6 d'une charnière selon la deuxième forme de réalisation sont identiques ou très similaires à ceux qui viennent d'être décrits. Par simplification, les éléments déjà décrits qui se retrouvent dans cette deuxième forme de réalisation sont désignés par les mêmes références numériques.

Selon cette deuxième forme de réalisation, et comme visible sur la figure 7, la vis 7 présente une portion distale filetée 7a ayant un diamètre externe de filet supérieur au diamètre qu'a la portion 7b du corps de la vis 7 destinée à s'étendre au travers de l'alésage que comprend le charnon pour recevoir cette vis.

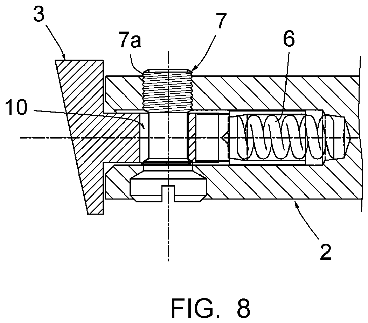

Il apparaît sur la figure 8 que l'alésage 10 du charnon 3 présente un diamètre adapté à être traversé par la portion distale filetée 7a de la vis 7, donc un diamètre notablement supérieur à celui de la portion 7b du corps de la vis. Il existe ainsi un jeu entre la paroi du charnon 3 délimitant l'alésage 10 et cette portion 7b. La pression exercée sur le charnon 3 par le ressort 6 amène le charnon 3 au contact de cette portion 7b, ce qui permet que le charnon 3 s'étende en dessous de la portion filetée 7a et qu'il forme ainsi une surface axiale de butée venant s'opposer au recul de la vis 7 en cas de début de dévissage de cette dernière. Ce dévissage est ainsi empêché de manière efficace.

L'invention fournit ainsi une charnière pour une branche de lunettes qui présente des avantages déterminants, précités, par rapport aux charnières selon la technique antérieure .

## Revendications

1. Charnière (1) pour une branche (2) de lunettes, comprenant un charnon (3) solidaire d'une embase (3a) destinée à être fixée à la monture de la paire de lunettes, une mortaise (4) aménagée dans la branche (2), dans laquelle ce charnon (3) est destiné à être engagé, et une vis (7), ou organe similaire, destinée à être engagée au travers de la branche (2) et du charnon (3) de manière à assembler la branche (2) au charnon (3) et à former l'axe de pivotement de la branche (2) ;
**caractérisée en ce que** :
- le charnon (3) présente une tranche convexe (3b), en arc de cercle centré sur l'axe de pivotement de la branche (2), et forme une encoche (8) sur le côté interne du charnon (3), délimitée, sur un côté, par l'embase (3a) ou par la portion du charnon (3) reliée à cette embase (3a), et, sur l'autre côté, par ladite tranche (3b) ;
- la charnière (1) comprend un patin (5) destiné à venir en appui contre ladite tranche (3b), formant une paroi (5b) d'appui contre cette tranche (3b) et ayant la même courbure que cette tranche (3b), cette paroi d'appui (5b) s'étendant sur un arc représentant au moins un quart de l'arc selon lequel s'étend la tranche (3b) ;
- la charnière (1) comprend un moyen élastique (6) sollicitant le patin (5) vers ladite tranche (3b), de telle sorte que ladite paroi d'appui (5b) soit pressée contre cette tranche,
- ladite encoche (8) est dimensionnée de façon à loger partiellement le patin (5) dans la position de repliage de la branche (2) le long de la monture.

2. Charnière (1) selon la revendication 1, **caractérisée en ce que** l'arc de cercle selon lequel s'étend ladite tranche (3b) est d'au moins 135°.

3. Charnière (1) selon la revendication 1 ou la revendication 2, **caractérisée en ce que** le patin (5) est dimensionné de manière à ce que sa paroi d'appui (5b) s'étende sur un arc dont la longueur est de l'ordre du tiers de celui selon lequel s'étend ladite tranche (3b).

4. Charnière (1) selon la revendication 3, **caractérisée en ce que** ladite paroi d'appui (5b) s'étend sur un arc de l'ordre de 70° et **en ce que** ladite tranche (3b) s'étend alors sur un arc de l'ordre de 210°.

5. Charnière (1) selon l'une des revendications 1 à 4, **caractérisée en ce que** le moyen élastique est constitué par un ressort hélicoïdal (6) interposé entre le patin (5) et une paroi de la branche (2).

6. Charnière (1) selon la revendication 5, **caractérisée en ce que** ladite paroi de la branche (2) est la paroi délimitant le fond de la mortaise (4).

7. Charnière (1) selon la revendication 6, **caractérisée en ce que** ledit fond présente un alésage (9) dans lequel est engagée une extrémité du ressort (6).

8. Charnière (1) selon l'une des revendications 5 à 7, **caractérisée en ce que** le patin (5) comprend, sur son côté opposé à ladite paroi d'appui (5b), une extension tubulaire (5c) apte à recevoir le ressort (6) en elle.

9. Charnière (1) selon l'une des revendications 1 à 8, **caractérisée en ce que** la vis (7) présente une portion distale filetée (7a) ayant un diamètre externe de filet supérieur au diamètre qu'a la portion (7b) du corps de la vis (7) destinée à s'étendre au travers de l'alésage que comprend le charnon (3) pour recevoir cette vis.

## Patentansprüche

1. Scharnier (1) für einen Bügel (2) einer Brille, umfassend ein Scharnierteil (3), das fest mit einer Basis (3a) verbunden ist, die dazu bestimmt ist, an dem Gestell der Brille befestigt zu werden, einen Schlitz (4), der in dem Bügel (2) ausgebildet ist und in dem dieses Scharnierteil (3) bestimmt ist, eingesetzt zu werden, und eine Schraube (7), oder ein ähnliches Organ, die dazu bestimmt ist, durch den Bügel (2) und durch das Scharnierteil (3) hindurch so eingesetzt zu werden, dass sie den Bügel (2) an dem Scharnierteil (3) montiert und die Schwenkachse des Bügels (2) bildet;
**dadurch gekennzeichnet, dass**
- das Scharnierteil (3) eine konvexe Kante (3b) aufweist, die kreisbogenförmig auf der Schwenkachse des Bügels (2) zentriert ist, und eine Einkerbung (8) auf der Innenseite des Scharnierteils (3) bildet, die, auf der einen Seite, durch die Basis (3a) oder durch den Teil des Scharnierteils (3), der mit dieser Basis (3a) verbunden ist, und, auf der anderen Seite, durch den Rand (3b) begrenzt ist;
- das Scharnier (1) einen Gleitschuh (5) umfasst, der dazu bestimmt ist, gegen die Kante (3b) zur Abstützung zu kommen, der eine Wand (5b) zur Abstützung gegen diese Kante (3b) bildet und der die gleiche Krümmung aufweist wie diese Kante (3b), wobei diese Abstützwand (5b) sich über einen Bogen erstreckt, der wenigstens ein Viertel des Bogens darstellt, gemäß dem sich die Kante (3b) erstreckt;
- das Scharnier (1) ein Federmittel (6) umfasst, das den Gleitschuh (5) zu der Kante (3b) hin beaufschlagt, so dass die Abstützwand (5b) gegen diese Kante gedrückt wird,
- die Einkerbung (8) so dimensioniert ist, dass sie in der eingeklappten Stellung des Bügels (2) entlang dem Gestell den Gleitschuh (5) teilweise aufnimmt.

2. Scharnier (1) nach Anspruch 1, **dadurch gekennzeichnet, dass** der Kreisbogen, gemäß dem sich die Kante (3b) erstreckt, wenigstens 135° beträgt.

3. Scharnier (1) nach Anspruch 1 oder Anspruch 2, **dadurch gekennzeichnet, dass** der Gleitschuh (5) so dimensioniert ist, dass seine Abstützwand (5b) sich über einen Bogen erstreckt, dessen Länge in der Größenordnung von einem Drittel des Bogens ist, gemäß dem sich die Kante (3b) erstreckt.

4. Scharnier (1) nach Anspruch 3, **dadurch gekennzeichnet, dass** die Abstützwand (5b) sich über einen Bogen in der Größenordnung von 70° erstreckt und dass die Kante (3b) sich dann über einen Bogen in der Größenordnung von 210° erstreckt.

5. Scharnier (1) nach einem der Ansprüche 1 bis 4, **dadurch gekennzeichnet, dass** das Federmittel von einer Schraubenfeder (6) gebildet ist, die zwischen dem Gleitschuh (5) und einer Wand des Bügels (2) angeordnet ist.

6. Scharnier (1) nach Anspruch 5, **dadurch gekennzeichnet, dass** die Wand des Bügels (2) die Wand ist, die den Boden des Schlitzes (4) begrenzt.

7. Scharnier (1) nach Anspruch 6, **dadurch gekennzeichnet, dass** der Boden eine Bohrung (9) aufweist, in der ein Ende der Feder (6) eingesetzt ist.

8. Scharnier (1) nach einem der Ansprüche 5 bis 7, **dadurch gekennzeichnet, dass** der Gleitschuh (5), auf seiner Seite, die der Abstützwand (5b) gegenüberliegt, einen rohrförmigen Fortsatz (5c) umfasst, der imstande ist, die Feder (6) in sich aufzunehmen.

9. Scharnier (1) nach einem der Ansprüche 1 bis 8, **dadurch gekennzeichnet, dass** die Schraube (7) einen mit Gewinde versehenen distalen Teil (7a) aufweist, der einen Gewindeaußendurchmesser aufweist, der größer ist als der Durchmesser, den der Teil (7b) des Körpers der Schraube (7) aufweist, der dazu bestimmt ist, sich durch die Bohrung hindurch zu erstrecken, die der Gewindeteil (3) umfasst, um diese Schraube aufzunehmen.

## Claims

1. Hinge (1) for a branch (2) of glasses, comprising a knuckle (3) integral with a base (3a) intended to be fixed to the frame of the pair of glasses, a mortise (4) arranged in the branch (2), in which this knuckle (3) is intended to be engaged, and a screw (7), or similar member, intended to be engaged through the branch (2) and the knuckle (3) so as to assembling the branch (2) to the knuckle (3) and forming the pivot axis of the branch (2);
**characterized in that**:
- the knuckle (3) has a convex edge (3b), in an arc of a circle centered on the pivot axis of the branch (2), and forms a notch (8) on the internal side of the knuckle (3), delimited, on one side, by the base (3a) or by the portion of the knuckle (3) connected to this base (3a), and, on the other side, by said edge (3b);
- the hinge (1) comprises a shoe (5) intended to bear against said edge (3b), forming a wall (5b) bearing against this edge (3b) and having the same curvature as this edge (3b), this bearing wall (5b) extending over an arc representing at least a quarter of the arc along which the edge (3b) extends;
- the hinge (1) comprises elastic means (6) urging the pad (5) towards said edge (3b), so that said bearing wall (5b) is pressed against this edge,
- said notch (8) is dimensioned so as to partially accommodate the pad (5) in the folding position of the branch (2) along the frame.

2. Hinge (1) according to Claim 1, **characterized in that** the arc of a circle along which the said edge (3b) extends is at least 135°.

3. Hinge (1) according to claim 1 or claim 2, **characterized in that** the shoe (5) is dimensioned so that its bearing wall (5b) extends over an arc the length of which is order of one third of that in which said section (3b) extends.

4. Hinge (1) according to claim 3, **characterized in that** said bearing wall (5b) extends over an arc of the order of 70 ° and **in that** said edge (3b) then extends over an arc of the order of 210°.

5. Hinge (1) according to one of claims 1 to 4, **characterized in that** the elastic means is constituted by a helical spring (6) interposed between the pad (5) and a wall of the branch (2).

6. Hinge (1) according to Claim 5, **characterized in that** the said wall of the branch (2) is the wall delimiting the bottom of the mortise (4).

7. Hinge (1) according to Claim 6, **characterized in that** the said base has a bore (9) in which one end of the spring (6) is engaged.

8. Hinge (1) according to one of claims 5 to 7, **characterized in that** the shoe (5) comprises, on its side opposite to said bearing wall (5b), a tubular extension (5c) suitable for receiving the spring (6) in it.

9. Hinge (1) according to one of claims 1 to 8, **characterized in that** the screw (7) has a threaded distal portion (7a) having an external thread diameter greater than the diameter of the portion (7b) of the body of the screw (7) intended to extend through the bore comprised by the knuckle (3) to receive this screw.
